# FASCICULE DE BREVET EUROPEEN

(11) **EP 3 672 356 B1**
(45) Date de publication et mention de la délivrance du brevet: **07.06.2023**
(21) Numéro de dépôt: 19219173.2
(22) Date de dépôt: 20.12.2019
(51) Int. Cl.: H04W 84/10, H04W 16/14, H04W 72/08, H04W 16/10, H04W 52/10, H04W 76/45, H04W 28/02, H04W 72/04

(54) **RÉDUCTION D'INTERFÉRENCE CAUSÉE PAR UNE INFRASTRUCTURE DE RÉSEAU MOBILE PRIVÉ DE RADIOCOMMUNICATION**
REDUZIERUNG DER STÖRUNG VON EINER MOBILEN FUNKNETZINFRASTRUKTUR
REDUCTION OF INTERFERENCE CAUSED BY A PRIVATE MOBILE RADIO NETWORK INFRASTRUCTURE

(30) Priorité: 21.12.2018 FR 1874035
(43) Date de publication de la demande: 24.06.2020
(73) Titulaire: BULL SAS, 78340 Les Clayes-sous-Bois (FR)
(72) Inventeur: PISON, Laurent, 91940 Les Ulis - France (FR); RAFFENOUX, Didier, 91940 Les Ulis - France (FR)
(74) Mandataire: IPAZ

(56) Documents cités:
- CN-A- 108 391 276
- JP-B2- 3 279 191
- US-A1- 2010 302 959
- US-A1- 2012 015 659
- US-A1- 2012 231 833
- US-A1- 2016 374 098
- US-A1- 2017 063 484

## Description

La présente invention concerne un procédé de réduction d'interférence causée par une infrastructure de réseau mobile privé de radiocommunication, un programme d'ordinateur correspondant et une station de base d'une infrastructure de réseau mobile privé de radiocommunication.

On connait de l'état de la technique des infrastructures de réseau mobile privé de radiocommunication (de l'anglais « Private Mobile Radiocommunication » ou PMR) comportant un module de coeur de réseau, un serveur d'abonnés et un module de station de base.

Une infrastructure mobile PMR est généralement une infrastructure utilisée par une équipe d'utilisateurs peu nombreux (jusqu'à 100 utilisateurs, voire 1 000 utilisateurs), pour une mission limitée dans le temps, par exemple une mission de secours ou de maintien de l'ordre. Ainsi, il est fréquent que plusieurs équipes, chacune équipée de son infrastructure PMR, interviennent sur une même mission.

Or, au cours de la mission, les infrastructures PMR peuvent se rapprocher les unes des autres, de sorte qu'elles se perturbent les unes des autres.

Les documents US 2017/063484 A1 et US 2012/231833 A1 traitent du contrôle d'interférence au sein de réseaux de télécommunication radio.

L'invention est définie par les revendication ci-dessous et a donc pour objet un procédé de réduction d'interférence causée par une infrastructure de réseau mobile privé de radiocommunication, comportant : pour au moins un terminal mobile attaché à une station de base de l'infrastructure, l'obtention d'au moins une caractéristique d'au moins un signal de radiocommunication occupant une bande de fréquences utilisée par la station de base et le terminal mobile pour communiquer entre eux et reçu par le terminal mobile ou bien la station de base ; la recherche à partir de la ou des caractéristiques d'une perturbation dans la bande de fréquences ; et, en cas de détection d'une perturbation dans la bande de fréquences, la diminution d'une puissance d'émission de la station de base au moins dans ladite bande de fréquences.

De façon optionnelle, le au moins un signal de radiocommunication comporte un signal de radiocommunication descendant, émis par la station de base et reçu par le terminal mobile.

De façon optionnelle également, le au moins un signal de radiocommunication comporte un signal de radiocommunication montant, émis par le terminal mobile et reçu par la station de base.

De façon optionnelle également, la au moins une caractéristique comporte l'un ou plusieurs parmi : un rapport de signal sur bruit, un rapport signal sur interférence et bruit, une puissance reçue de signal de référence et une qualité reçue de signal de référence.

De façon optionnelle également, le procédé comporte en outre l'obtention d'une distance séparant le terminal mobile de la station de base, et la recherche d'une perturbation tient compte de la distance.

De façon optionnelle également, le procédé comporte en outre la suspension d'émission par la station de base dans la bande de fréquences pendant un intervalle de temps, et le au moins un signal de radiocommunication comporte un signal de radiocommunication reçu par la station de base pendant l'intervalle de temps.

De façon optionnelle également, le procédé comporte en outre, en réponse à une requête de la station de base, la suspension d'émission par le terminal mobile dans la bande de fréquences pendant un intervalle de temps, et le au moins un signal de radiocommunication comporte un signal de radiocommunication reçu par la station de base pendant l'intervalle de temps.

De façon optionnelle également, la au moins une caractéristique du signal de radiocommunication reçu par la station de base pendant l'intervalle de temps comporte une puissance de ce signal de radiocommunication.

Il est également proposé un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé de réduction d'interférence selon l'invention, lorsque ledit programme est exécuté sur un ordinateur.

Il est également proposé une station de base d'une infrastructure de réseau mobile privé de radiocommunication, comportant des moyens logiciels et/ou matériels pour : pour au moins un terminal mobile attaché à la station de base, obtenir au moins une caractéristique d'au moins un signal de radiocommunication occupant une bande de fréquences utilisée par la station de base et le terminal mobile pour communiquer entre eux et reçu par le terminal mobile ou bien la station de base ; rechercher à partir de la ou des caractéristiques une perturbation dans la bande de fréquences ; et, en cas de détection d'une perturbation dans la bande de fréquences, diminuer une puissance d'émission au moins dans ladite une bande de fréquences.

L'invention sera mieux comprise à l'aide de la description qui va suivre, donnée uniquement à titre d'exemple et faite en se référant aux dessins annexés dans lesquels :
[Fig.1] la figure 1 représente schématiquement la structure générale, selon un premier mode de réalisation, d'un dispositif transportable mettant en oeuvre une infrastructure locale de réseau mobile privé de radiocommunication,
[Fig.2] la figure 2 représente schématiquement la structure logicielle du dispositif de la figure 1,
[Fig.3] la figure 3 représente schématiquement la structure générale, selon un deuxième mode de réalisation, d'un dispositif transportable mettant en oeuvre une infrastructure locale de réseau mobile privé de radiocommunication,
[Fig.4] la figure 4 représente schématiquement la structure logicielle du dispositif de la figure 3,
[Fig.5] la figure 5 représente schématiquement la structure générale d'une installation de réseau mobile privé de radiocommunication, comportant plusieurs dispositifs selon les figures précédentes,
[Fig.6] la figure 6 représente un schéma-blocs illustrant les étapes d'un procédé de fonctionnement de l'installation de la figure 5,
[Fig.7] la figure 7 représente l'installation de la figure 5 après la connexion des dispositifs entre eux,
[Fig.8] la figure 8 représente l'installation de la figure 7 après l'attachement de terminaux mobiles,
[Fig.9] la figure 9 représente l'installation de la figure 8 après la déconnexion d'un dispositif élu,
[Fig.10] la figure 10 représente l'installation de la figure 9 après le déplacement d'un des terminaux mobiles,
[Fig.11] la figure 11 représente un schéma-blocs illustrant les étapes d'un premier procédé de reconfiguration de l'installation de la figure 5,
[Fig.12] la figure 12 représente l'installation de la figure 5 après introduction d'un dispositif de stockage externe,
[Fig.13] la figure 13 représente l'installation de la figure 5 après l'attachement d'un terminal mobile,
[Fig.14] la figure 14 représente l'installation de la figure 5 après le retrait du dispositif de stockage externe,
[Fig.15] la figure 15 représente un schéma-blocs illustrant les étapes d'un deuxième procédé de reconfiguration de l'installation de la figure 5,
[Fig.16] la figure 16 représente, d'une part, l'installation de la figure 5 après introduction d'un dispositif de stockage externe et, d'autre part, une autre installation,
[Fig.17] la figure 17 représente les installations de la figure 16, après leur fédération,
[Fig.18] la figure 18 représente un schéma-blocs illustrant les étapes d'un procédé de fédération de l'installation de la figure 5 avec une autre installation,
[Fig.19] la figure 19 représente l'installation de la figure 5 fédérée avec une autre installation,
[Fig.20] la figure 20 représente un schéma-blocs illustrant les étapes d'un procédé de réduction d'interférence, selon des premier et deuxième modes de réalisation,
[Fig.21] la figure 21 représente un schéma-blocs illustrant les étapes d'un procédé de réduction d'interférence, selon un troisième mode de réalisation,
[Fig.22] la figure 22 représente un schéma-blocs illustrant les étapes d'un procédé de réduction d'interférence, selon un quatrième mode de réalisation.

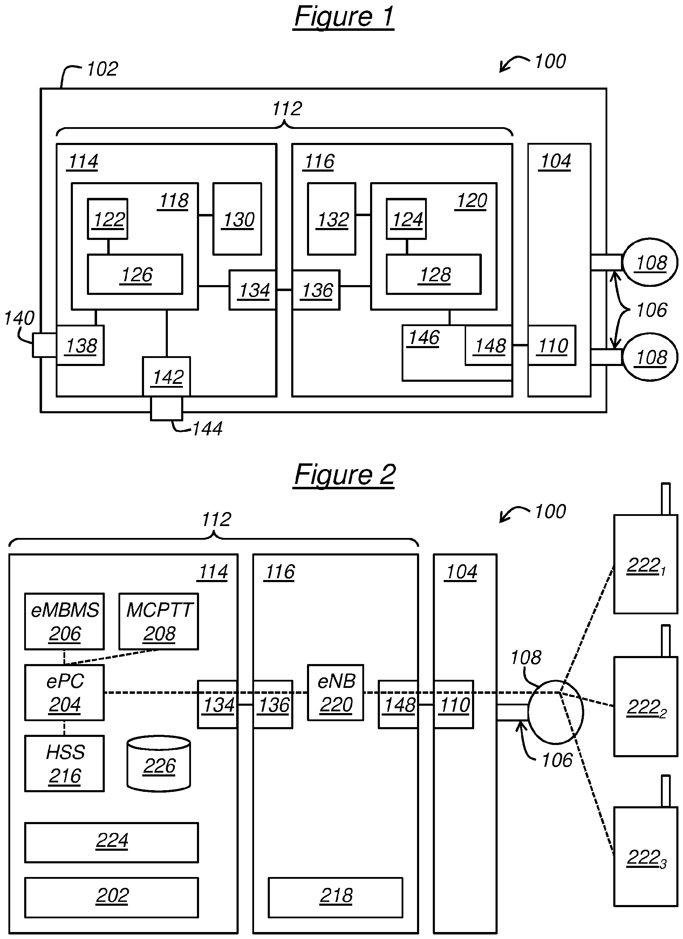

En référence aux figures 1 et 2, un dispositif transportable 100 selon un premier mode de réalisation, mettant en oeuvre une infrastructure locale de réseau mobile privé de radiocommunication (de l'anglais « Private Mobile Radiocommunications » ou PMR), va à présent être décrit.

Le terme « transportable » signifie par exemple que le dispositif 100 présente un encombrement et un poids lui permettant d'être transporté par une personne. Par exemple, le dispositif 100 fait au plus 0,5 m³ et pèse au plus 50 kg.

En référence à la figure 1, le dispositif 100 comporte tout d'abord un boîtier 102. Le boîtier 102 peut par exemple être muni de bretelles (non représentées) ou positionnable sur une structure porteuse à bretelles pour permettre à une personne de le porter sur le dos, comme un sac à dos. Le boitier 102 peut également être fixé à un mur (fixe) sur lequel on veut brancher un système mobile pour fédération commune.

Le dispositif 100 comporte en outre, dans ce boîtier 102, une tête radio 104 présentant au moins une prise 106 accessible depuis l'extérieur du boîtier 102 et destinée à être connectée à une antenne radio 108 s'étendant à l'extérieur du boîtier 102, de sorte que le dispositif 100 puisse couvrir une certaine zone de couverture radio. Dans l'exemple décrit, la tête radio 104 présente deux prises 106 respectivement connectées à deux antennes radio 108. Alternativement, plus de prises 106 pourraient être prévues. La tête radio 104 comporte en outre, dans l'exemple décrit, une interface réseau 110 conforme à la norme CPRI (de l'anglais « Common Public Radio Interface »). Alternativement, l'interface réseau 110 pourrait être toute interface de support d'échange d'échantillons radio de et vers la tête radio. En 5G, cela pourrait être un eCPRI, eth1G, ou JESD/ADI ou tout autre lien physique avec un protocole d'échange des échantillons. Si la tête est insérée dans le boitier, ça peut être une autre norme ou même propriétaire.

Dans le cadre de la norme CPRI, différents niveaux physiques (fibre ou électrique) et protocolaires logiques (ORI, propriétaire,...) sont possibles.

Le dispositif 100 comporte en outre, toujours dans le boîtier 102, un système informatique 112 connecté à la tête radio 104 et comportant au moins un microprocesseur x86 et au moins une mémoire associée à ce ou ces microprocesseurs x86. Comme cela est connu en soit, la famille des microprocesseurs x86 regroupe les microprocesseurs compatibles avec le jeu d'instructions de l'Intel 8086 (marque déposée). Un avantage d'utiliser cette famille de microprocesseurs est que le logiciel développé pour un microprocesseur de cette famille et facilement portable à un autre microprocesseur de cette famille.

Dans l'exemple décrit, le système informatique 112 comporte des premier et deuxième ordinateurs 114, 116. Chaque ordinateur 114, 116 comporte une carte mère 118, 120, un microprocesseur x86 122, 124 reçu par la carte mère 118, 120 et une mémoire principale 126, 128, telle qu'une mémoire RAM (de l'anglais « Random Access Memory ») également reçue par la carte mère 118, 120.

Chaque ordinateur 114, 116 comporte en outre une mémoire de masse 130, 132, telle qu'un disque dur, connectée à la carte mère 118, 120. Les ordinateurs 114, 116 comportent en outre respectivement deux interfaces réseau 134, 136, par exemple de type Ethernet, connectées l'une à l'autre pour permettre aux ordinateurs 114, 116 de communiquer entre eux. Le premier ordinateur 114 comporte en outre, d'une part, une deuxième interface réseau 138, par exemple de type Ethernet, et présentant un port 140, par exemple de type RJ45, accessible depuis l'extérieur du boîtier 102 et, d'autre part, un bus 142, par exemple de type USB, présentant un port 144, par exemple de type USB, également accessible depuis l'extérieur du boîtier 102. De son côté, le deuxième ordinateur 116 comporte en outre un circuit logique programmable 146, tel qu'un FPGA (de l'anglais « Field-Programmable Gate Array »), implémentant une interface réseau 148 conforme, dans l'exemple décrit, à la norme CPRI et connectée à l'interface réseau CPRI 110 de la tête radio 104 pour permettre au deuxième ordinateur 116 et à la tête radio 104 de communiquer entre eux.

En référence à la figure 2, la structure logicielle du système informatique 112 va à présent être décrite. Pour cela, comme cela est connu en soit, cette structure logicielle contient du code informatique, pouvant être divisé en plusieurs programmes d'ordinateur, et destiné à être copié dans la mémoire principale 126, 128 sur laquelle le microprocesseur x86 122, 124 a un accès direct pour exécuter ce code informatique.

Ainsi, la mémoire de masse 130 du premier ordinateur 114 contient tout d'abord un système d'exploitation Linux 202 (marque déposée).

La mémoire de masse 130 du premier ordinateur 114 contient en outre du code informatique conçu pour être exécutés par le microprocesseur x86 122, par exemple au travers du système d'exploitation Linux 202, de manière à implémenter les éléments suivants de l'infrastructure locale :
- un module de coeur de réseau 204,
- un module de service de diffusion 206 connecté au module de coeur de réseau 204,
- un module de service 208 connecté au module de coeur de réseau 204 et offrant au moins un service PMR, dans l'exemple décrit un service de pression pour transmettre ou PTT (de l'anglais « Push To Talk » ou bien « Press To Transmit »), et
- un serveur d'abonnés 216 connecté au module de coeur de réseau 204.

Ces éléments sont conçus pour utiliser, pour leur fonctionnement, des données de fonctionnement en cours 226 enregistrées dans le système informatique 112, par exemple dans la mémoire de masse 130 du premier ordinateur 114. Ces données de fonctionnement en cours 226 peuvent évoluer au cours du temps, par exemple être modifiées et/ou complétées, par exemple en fonction du fonctionnement de l'infrastructure locale.

Sur les figures, les données de fonctionnement en cours 226 sont représentées comme séparées des éléments 204, 206, 208 et 216 de l'architecture locale. Cependant, au moins une partie, voire la totalité, des données de fonctionnement en cours 226 pourrait être située dans un ou plusieurs de ces éléments 204, 206, 208 et 216.

Ces données de fonctionnement en cours 226 comportent par exemple une liste en cours d'identifiants de terminaux mobiles autorisés à s'attacher à l'infrastructure locale. Cette liste en cours est par exemple contenue dans le serveur d'abonnés 216. Les identifiants sont par exemple des IMSI (de l'anglais « International Mobile Subscriber Identity »), également stockés chacun dans une carte SIM (de l'anglais « Subscriber Identity Module ») du terminal mobile considéré.

Les données de fonctionnement en cours 226 peuvent comporter en outre, pour chaque terminal mobile de la liste, des paramètres de fonctionnement. Ces paramètres de fonctionnement comportent par exemple une ou plusieurs des données suivantes, par exemple enregistrées dans le serveur d'abonnées 216 :
- un identifiant du terminal mobile, tel que l'IMEI (de l'anglais « International Mobile Equipment Identity »),
- un numéro d'appel international, par exemple le MSISDN (de l'anglais « Mobile Subscriber International ISDN Number »), et
- le ou les services auxquels le terminal mobile a souscrit, en particulier dans l'exemple décrit, le service PTT.

Les paramètres de fonctionnement peuvent en outre comporter d'autres paramètres, comme par exemple une adresse IP (de l'anglais « Internet Protocol ») du terminal mobile, pouvant être enregistrés dans d'autres éléments de l'infrastructure locale. Ils peuvent également comporter des paramètres applicatifs, par exemples utilisés par les serveurs 206, 208. Par exemple, pour le serveur 208, ces paramètres peuvent comprendre un profil et/ou un identifient de client (« clientMC »).

Les données de fonctionnement peuvent par exemple comporter en outre des paramètres applicatifs tels qu'une liste des clients applicatifs (PTT ou autre application) ou bien des profils de clients applicatifs.

Des données de fonctionnement par défaut peuvent être prévues dans le dispositif 100, par exemple dans la mémoire de masse 130 du premier ordinateur 114. Ces données de fonctionnement par défaut sont conçues pour être récupérées au démarrage du dispositif 100, pour être utilisées lors du fonctionnement de l'infrastructure locale comme données de fonctionnement en cours 226. Les données de fonctionnement par défaut peuvent en particulier comprendre une liste par défaut d'identifiants de terminaux mobiles autorisés à s'attacher à l'infrastructure locale.

La mémoire de masse 130 du premier ordinateur 114 contient en outre du code informatique conçu pour être exécuté par le microprocesseur x86 122, par exemple au travers du système d'exploitation Linux 202, de manière à implémenter un module de gestion 224. Les fonctions du module de gestion seront décrites plus loin.

Par ailleurs, la mémoire de masse 132 du deuxième ordinateur 116 contient tout d'abord un deuxième système d'exploitation Linux 218.

La mémoire de masse 132 du deuxième ordinateur 116 contient en outre du code informatique conçu pour être exécutés par le microprocesseur x86 124, par exemple au travers du système d'exploitation Linux 218, de manière à implémenter un module de station de base 220 de l'infrastructure locale. Dans l'exemple décrit, ce module de station de base 220 est connecté au module de coeur de réseau 204 via les interfaces réseau Ethernet 134, 136.

Le module de station de base 220 est conçu pour se connecter, via les interfaces réseau 148, 110 (CPRI dans l'exemple décrit), la tête radio 104 et l'antenne radio 108, à tout terminal mobile présent dans la zone de couverture du dispositif 100 et listé dans le serveur d'abonnés 216, comme les terminaux mobiles 222₁, 222₂, 222₃ représentés sur la figure 2.

Le module de station de base 220 est notamment conçu pour gérer les communications radio avec les terminaux mobiles 222₁, 222₂, 222₃ et pour router les données entre les terminaux mobiles 222₁, 222₂, 222₃ et le module de coeur de réseau 204.

Le module de coeur de réseau 204 est notamment conçu pour vérifier, en consultant le serveur d'abonnés 216, que tout terminal mobile cherchant à s'attacher à l'infrastructure locale ou bien à utiliser les services offerts par les modules de service 206, 208 y est autorisé. Le module de coeur de réseau 204 est en outre conçu pour router les données entre les modules de service 206, 208 et le module de station de base 220. Le module de coeur de réseau 204 est en outre conçu pour établir un chemin de communication entre deux téléphones mobiles cherchant à communiquer entre eux.

Dans l'exemple décrit, l'infrastructure est conforme à la norme LTE, de sorte que :
- le module de coeur de réseau 204 est un evolved Packet Core (ePC),
- le module de diffusion 206 est un evolved Multimedia Broadcast Multicast Services (eMBMS),
- le serveur d'abonnés 216 est un Home Subscriber Server (HSS), et
- le module de station de base 220 est un evolved NodeB (eNB),
tels que définis dans cette norme.

Alternativement, l'infrastructure pourrait être 3G ou 5G ou 3GPP ou WiFi.

En outre, le service PTT offert par le module de service 208 peut être le service Mission Critical Push To Talk (MCPTT).

Le PTT est un service supporté par un standard 'compatible' ou supportable par du standard LTE. Mais ça peut être aussi bien être supporté sur du Wifi...

Le PTT est une application possible, pas la seule, et implique du service et de la Qos sur le système LTE.

Un exemple de fonctionnement du dispositif 100 pour mettre en oeuvre une infrastructure locale PMR va à présent être décrit.

Dans l'exemple décrit, les données de fonctionnement par défaut comportent une liste d'identifiants de terminaux mobiles autorisés à s'attacher à l'infrastructure locale, ainsi que, pour chacun d'eux, un paramètre indiquant si ce terminal mobile est autorisé à utiliser le service PTT. Le tableau 1 ci-dessous illustre ces données de fonctionnement par défaut - la colonne ID regroupant les identifiants IMSI (1, 2, 3 respectivement pour les terminaux 222₁, 222₂, 222₃) et la colonne PTT regroupant les paramètres indiquant l'autorisation ou non d'utilisation du service PTT (O indiquant une telle autorisation) :

**[Tableau 1]**

| **ID** | **PTT** |
|---|---|
| 1 | O |
| 2 | O |
| 3 | O |

Au démarrage du dispositif 100, l'infrastructure locale récupère les données de fonctionnement par défaut pour les utiliser en tant que données de fonctionnement en cours. En particulier, le serveur d'abonnés 216 récupère les identifiants IMSI et les autorisations d'utilisation du service PTT.

Lorsque l'un des terminaux mobiles 222₁, 222₂, 222₃ entre dans la zone de couverture du dispositif 100, une procédure d'attachement avec l'infrastructure locale est mise en oeuvre. Au cours de cette procédure d'attachement, le terminal mobile considéré échange des données avec le module de coeur de réseau 204, via le module de station de base 220, afin que le module de coeur de réseau 204 vérifie, en consultant le serveur d'abonnés 216, que le terminal mobile considéré est autorisé à s'attacher à l'infrastructure locale et à utiliser le service PTT. Dans l'exemple décrit, l'identifiant IMSI du terminal mobile et l'autorisation d'utilisation du service PTT sont recherchés dans le serveur d'abonnés 216 et, s'ils y sont trouvés, ce terminal mobile est autorisé à s'attacher et à utiliser le service PTT.

Il sera apprécié que l'identifiant UE IMSI peut ne pas être lié de manière permanente à un client applicatif. Du coup, les listes peuvent être dissociées et mises en lien par exemple au moment où : 1. un UE se connecte (et s'authentifie) - HSS / 2.Puis au niveau applicatif ou un client se connecte et s'authentifie (- liste applicative PTT ou autre appli. Ainsi un client (utilisateur) peut dans le temps utiliser ou partager un UE avec d'autres clients utilisateur. Mais une autre implémentation -pour certains ou tous les utilisateurs- est d'utiliser toujours le même UE (qui leur est dédié) et donc être toujours associé au même UE.

Au cours de cette procédure d'attachement, une adresse IP est en outre allouée au terminal mobile. Ainsi, dans l'exemple décrit, les données de fonctionnement en cours 226 sont modifiées pour préciser cette adresse IP et un identifiant du dispositif (dans le cas présent, S1 pour le dispositif 100) auquel le terminal mobile est attaché. Le tableau 2 ci-dessous illustre les données de fonctionnement en cours 226 après l'attachement des terminaux mobiles 222₁, 222₂, 222₃.

**[Tableau 2]**

| **ID** | **PTT** | **IP** | **DISPOSITIF** |
|---|---|---|---|
| 1 | ○ | 1.1.1.1 | S1 |
| 2 | ○ | 1.1.1.2 | S1 |
| 3 | ○ | 1.1.1.3 | S1 |

Après s'être attachés à l'infrastructure locale, les terminaux mobiles 222₁, 222₂, 222₃ sont donc capables de passer des appels téléphoniques entre eux via l'infrastructure locale.

En outre, les terminaux mobiles 222₁, 222₂, 222₃ peuvent chacun lancer une application PTT qui communique avec le module de service 208 pour utiliser le service PTT de sorte que, tant que l'utilisateur d'un des terminaux mobiles 222₁, 222₂, 222₃ appuie sur un bouton prédéterminé de son terminal mobile, ce dernier passe en mode émetteur tandis que les autres terminaux mobiles passent en mode récepteur. Dans cette configuration, des flux audio et/ou vidéo émis par le terminal mobile émetteur sont transmis au module de service 208 qui les diffuse aux terminaux mobiles en mode récepteur. Pour cela, dans l'exemple décrit, le service PTT utilise le module de diffusion 206. Lorsque l'utilisateur relâche le bouton prédéterminé, les terminaux mobiles 222₁, 222₂, 222₃ passent chacun dans un mode d'attente jusqu'à ce qu'un utilisateur appuie sur le bouton prédéterminé de son terminal mobile.

L'application peut supporter ses propres données correspondant aux tables précédentes et gérées de manière concomitante avec les terminaux d'accès à ses clients applicatifs.

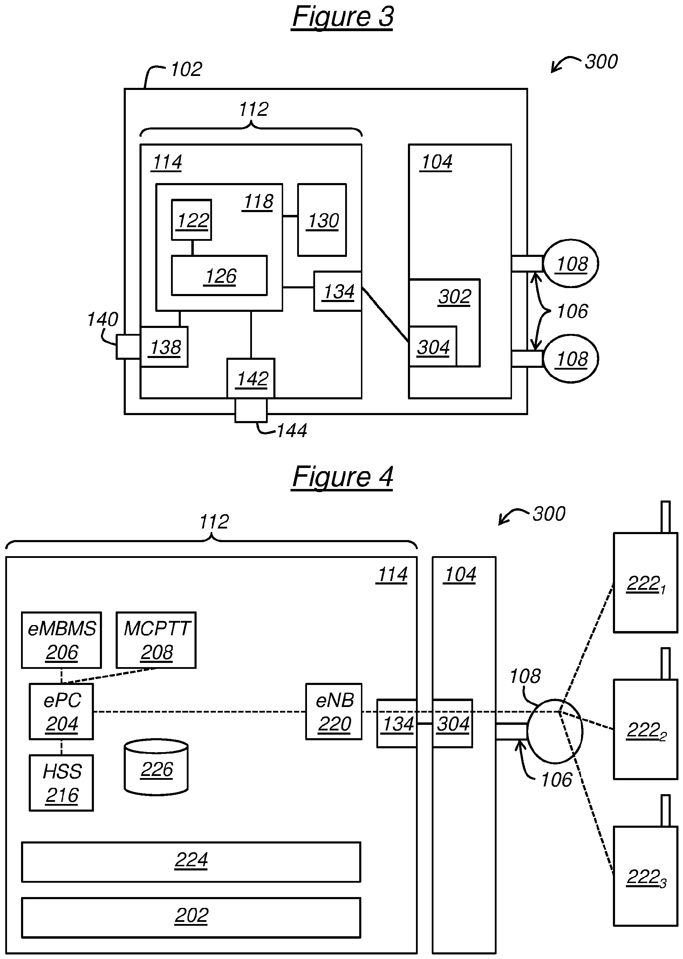

En référence aux figures 3 et 4, un dispositif transportable 300 selon un deuxième mode de réalisation, mettant en oeuvre une infrastructure locale PMR, va à présent être décrit.

Le dispositif 300 est identique au dispositif 100, si ce n'est pour les différences qui vont à présent être décrites.

En référence à la figure 3, le système informatique 112 ne comporte que le premier ordinateur 114.

La tête radio 104 comporte un circuit logique programmable 302, tel qu'un FPGA, implémentant une interface réseau de type Ethernet 304 connectée à l'interface réseau Ethernet 134 de l'ordinateur 114, pour permettre à l'ordinateur 114 et à la tête radio 104 de communiquer entre eux. Alternativement, des interfaces PCle ou autre pourrait être utilisées.

En référence à la figure 4, le module de station de base 220 est installé sur l'ordinateur 114 et destiné à être exécuté par ce dernier.

L'exemple de fonctionnement du dispositif 100 décrit précédemment est applicable au dispositif 300.

Le dispositif 300 utilisant un seul ordinateur au lieu de deux dans le dispositif 100, il peut présenter un encombrement et/ou un poids réduit. En revanche, il pourrait ne pas être capable de gérer autant d'abonnés que le dispositif 100.

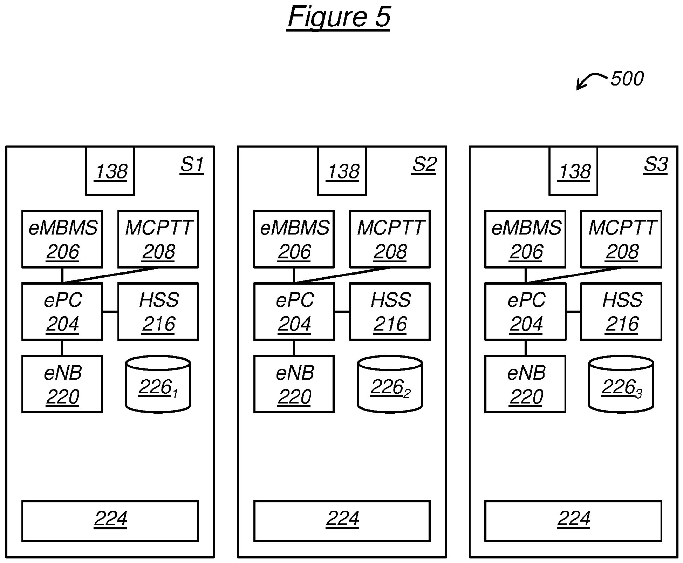

En référence à la figure 5, une installation PMR 500 va à présent être décrite.

De manière générale, une installation PMR selon la présente invention comporte un ou plusieurs dispositifs pouvant être chacun comme celui des figures 1 et 2 ou bien comme celui des figures 3 et 4. Ainsi, comme cela a été décrit en référence aux figures 1 à 4, chaque dispositif de l'installation comporte, d'une part, une infrastructure locale PMR comportant un module de coeur de réseau 204, un module de service de diffusion 206, un module de service PTT 208, un serveur d'abonnés 216 et un module de station de station de base 220 et, d'autre part, une interface réseau 138, un module de gestion 224, ce ou ces modules de gestion 2224 formant un système de gestion, également désigné par la référence 224, et des données de fonctionnement par défaut.

Dans l'exemple décrit, l'installation 500 comporte plusieurs dispositifs (trois dans l'exemple décrit, portant respectivement les références S1, S2, S3). Les données de fonctionnement par défaut de ces dispositifs S1, S2, S3 portent des références différentes, respectivement 226₁, 226₂ et 226₃, pour les distinguer.

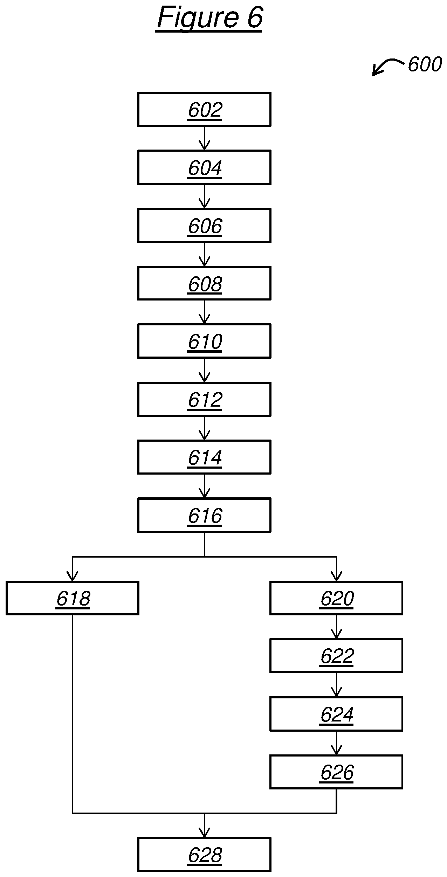

En référence aux figures 6 à 10, un premier procédé 600 de fonctionnement de l'installation 500 va à présent être décrit.

Au cours d'une étape 602, les dispositifs S1, S2, S3 sont connectés entre eux via leurs interfaces réseau 138 par une connexion réseau (« backhaul » en anglais). Cette connexion peut être filaire ou bien, de préférence, sans fil.

Au cours d'une étape 604, le système de gestion 224 élit un des dispositifs S1, S2, S3. Dans l'exemple décrit, le dispositif S1 est élu. Par exemple, un rang de priorité est préalablement attribué à chaque dispositif S1, S2, S3 et enregistré dans ce dispositif S1, S2, S3. Le dispositif élu est alors celui ayant le rang de priorité le plus élevé.

Au cours d'une étape 606, le système de gestion 224 désactive le module de coeur de réseau 204, les modules de service 206, 208, le serveur d'abonnés 216 et les données de fonctionnement 226₂, 226₃ de chaque dispositif non-élu S2, S3.

Au cours d'une étape 608, le système de gestion 224 connecte le module de station de base 220 de chaque dispositif S1, S2, S3 au module de coeur de réseau 204 du dispositif élu S1 pour former une infrastructure distribuée PMR. En particulier, le module de station de base 220 de chaque dispositif non-élu S2, S3 est connecté au travers des interfaces réseaux 138.

Au cours d'une étape 610, le dispositif élu S1 récupère les données de fonctionnement 226₁ par défaut qu'il contient pour que ses modules 204, 206, 208 et son serveur 216 les utilisent. Dans l'exemple décrit, les données de fonctionnement par défaut 226₁ sont les mêmes que celles décrites précédemment pour le dispositif 100 et sont rappelées dans le tableau 3 suivant :

**[Tableau 3]**

| **ID** | **PTT** |
|---|---|
| 1 | ○ |
| 2 | ○ |
| 3 | ○ |

Au cours d'une étape 612, le système de gestion 224 réalise, sur chaque dispositif non-élu S2, S3, une copie synchronisée 226₁* des données de fonctionnement 226₁ du dispositif élu S1. Cela signifie en particulier que le système de gestion 224 maintient ce ou ces copies 226₁* à jour en cas de modification au cours du temps des données de fonctionnement d'origine 226₁.

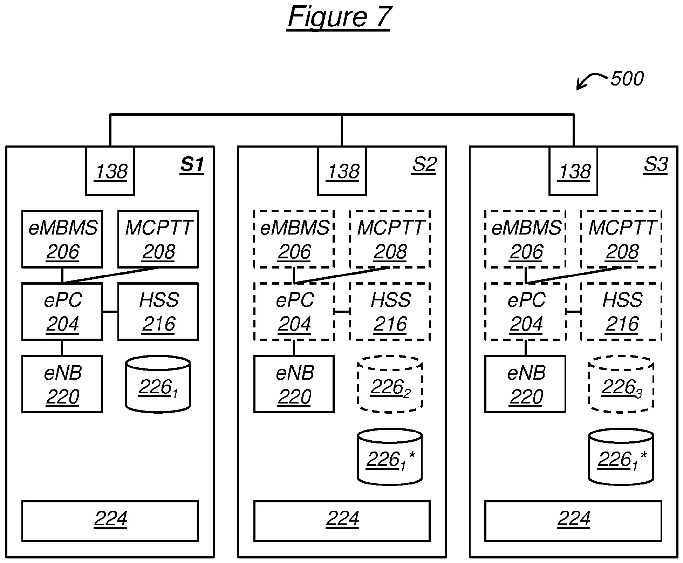

Le résultat des étapes 602 à 612 est illustré sur la figure 7, avec les éléments désactivés en pointillés.

Au cours d'une étape 614, les téléphones mobiles 222₁, 222₂, 222₃ s'attachent à l'infrastructure distribuée. Pour cela, une procédure d'attachement à l'infrastructure distribuée est mise en oeuvre, cette procédure d'attachement étant similaire à celle décrite plus haut pour le dispositif 100, en remplaçant l'architecture locale par l'architecture distribuée.

Les données de fonctionnement 226₁ sont donc modifiées en conséquence (de même que les copies synchronisées 226₁*), tel qu'illustré dans le tableau 4 suivant :

**[Tableau 4]**

| **ID** | **PTT** | **IP** | **DISPOSITIF** |
|---|---|---|---|
| 1 | ○ | 1.1.1.1 | S1 |
| 2 | ○ | 1.1.1.2 | S1 |
| 3 | ○ | 1.1.1.3 | S3 |

L'adresse IP peut (dans certains cas d'implémentation où le client est reactive sur un seul serveur) être modifiée par le serveur. Ce qui compte est que l'identité du client soit valide et active. Par ailleurs, dans l'exemple décrit, l'adresse IP peut être soit statique soit dynamique de manière à pouvoir changer.

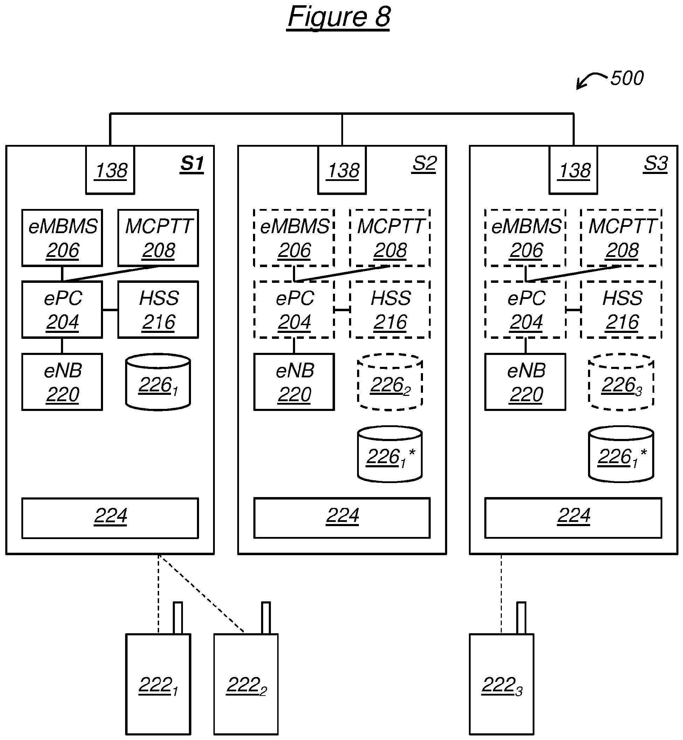

Le résultat de l'étape 614 est illustré sur la figure 8.

Au cours d'une étape 616, le dispositif S1 est déconnecté des dispositifs S2, S3.

Au cours d'une étape 618, le dispositif S1 continue de fonctionner pour former une première nouvelle infrastructure PMR, sans les stations de base 220 des dispositifs S2 et S3.

Parallèlement, au cours d'une étape 620, le système de gestion 224 des dispositifs S2, S3 toujours connectés entre eux élit un dispositif parmi le ou les dispositifs toujours connectés S2, S3. Dans l'exemple décrit, le dispositif S2 est élu.

Au cours d'une étape 622, le système de gestion 224 désactive le module de coeur de réseau 204, les modules de service 206, 208 et le serveur d'abonnés 216 de chaque dispositif non-élu S3 et active le module de coeur de réseau 204, les modules de service 206, 208 et le serveur d'abonnés 216 du dispositif élu S2.

Au cours d'une étape 624, le système de gestion 224 connecte le module de station de base 220 de chaque dispositif S2, S3 au module de coeur de réseau 204 du dispositif élu S2 pour former une deuxième nouvelle infrastructure PMR, qui est dans l'exemple décrit une infrastructure distribuée sur les dispositifs S2, S3.

Au cours d'une étape 626, le système de gestion 224 fournit aux éléments 204, 206, 208, 216 du dispositif élu S2 la copie 226₁* des données de fonctionnement présente sur le dispositif élu S2, pour que ces éléments utilisent ces données de fonctionnement pour le fonctionnement de l'infrastructure distribuée PMR.

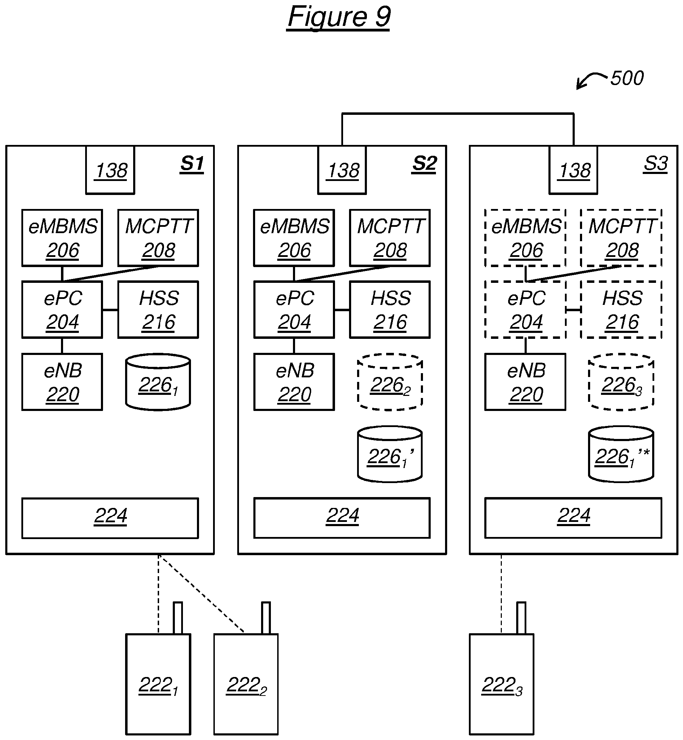

Le résultat des étapes 616 à 626 est illustré sur la figure 9. À partir de ce moment, il existe donc deux infrastructure PMR : une première formée par le dispositif S1 et une deuxième formée par les dispositifs S2 et S3. Ces deux infrastructures PMR évoluent alors indépendamment l'une de l'autre de sorte que les données de fonctionnement peuvent diverger. Ainsi, sur la figure 9, les données de fonctionnement utilisées par les éléments 204, 206, 208, 216 du dispositif S2 portent la référence 226₁' pour les distinguer des données de fonctionnement 226₁ du dispositif S1. En outre, dans la deuxième infrastructure PMR, une copie synchronisée 226₁'* des données de fonctionnement 226₁' est réalisée, par le système de gestion 224, sur chaque dispositif non élu S3.

Au cours d'une étape 628, le téléphone mobile 222₂ sort de la zone de couverture du dispositif S1 et entre dans la zone de couverture du dispositif S2.

Comme les données de fonctionnement 226₁' sont issues des données de fonctionnement 226₁ avant coupure, elles comportent la liste de terminaux mobiles autorisées de l'infrastructure PMR d'origine et les paramètres de tous ces terminaux mobiles. Ainsi, le terminal mobile 222₂ est autorisé à s'attacher à la deuxième infrastructure PMR, et ce changement d'infrastructure PMR peut se faire en minimisant l'interruption de service pour le terminal mobile 222₂.

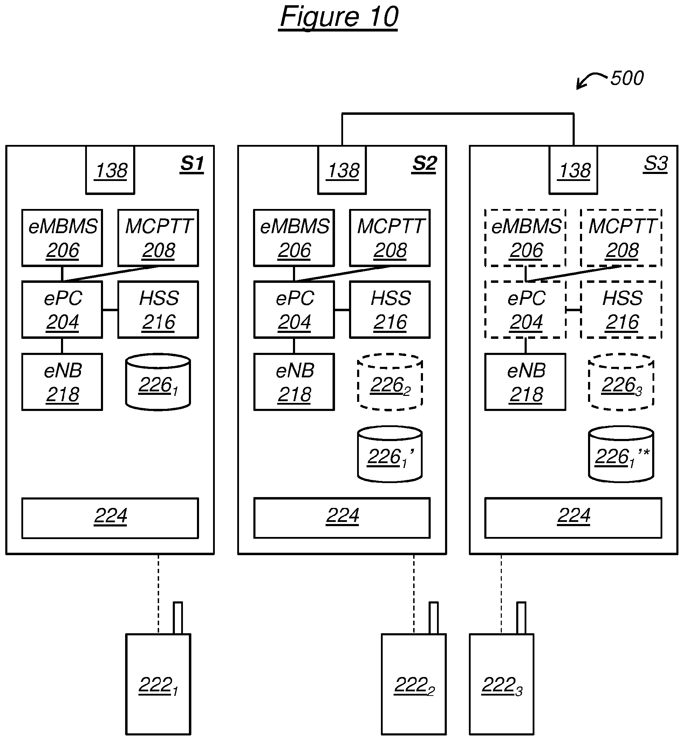

Le résultat de l'étape 628 est illustré sur la figure 10.

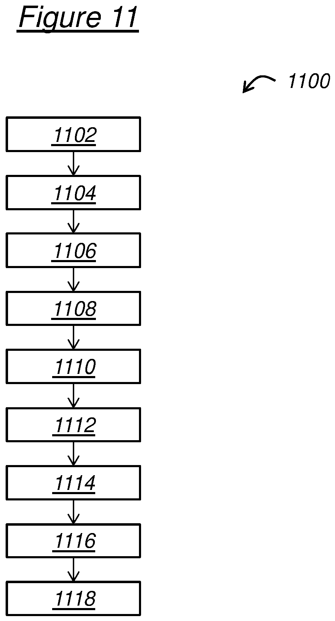

En référence aux figures 11 à 14, un premier procédé 1100 de reconfiguration de l'installation 500 va à présent être décrit.

Initialement, l'installation 500 est dans l'état illustré sur la figure 8, c'est-à-dire qu'elle met en oeuvre une infrastructure PMR distribuée, dans laquelle le dispositif S1 est élu. Cette infrastructure PMR distribuée utilise les données de fonctionnement en cours 226₁ qui comportent la liste en cours d'identifiants de terminaux mobiles et, pour chacun d'eux, des paramètres de fonctionnement.

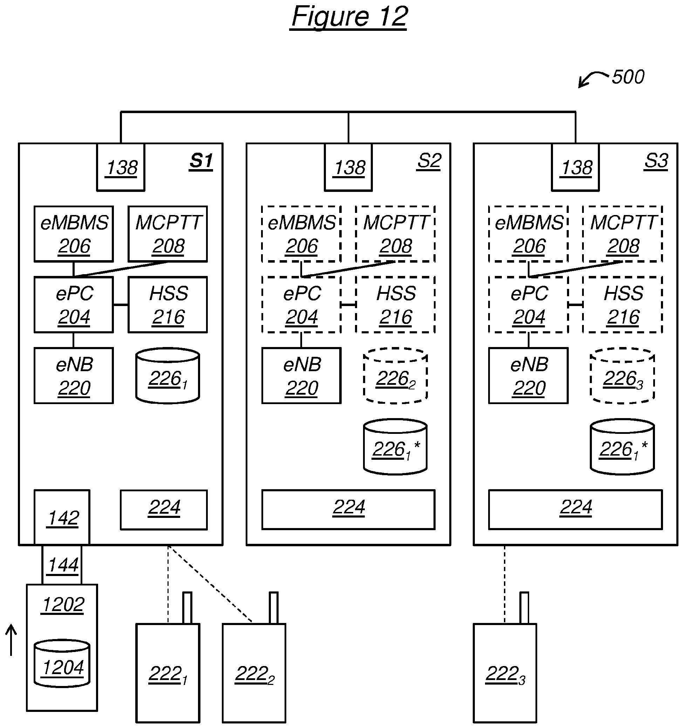

Au cours d'une étape 1102, illustrée sur la figure 12, un dispositif de stockage externe 1202 (une clé USB dans l'exemple décrit) est reçu dans le port externe 144 d'un des dispositifs S1, S2, S3 de l'installation 500 (de préférence, le dispositif élu S1 comme dans l'exemple décrit). Ce dispositif de stockage externe 1202 contient des données de fonctionnement complémentaires 1204 comportant une liste complémentaire d'identifiants de terminaux mobiles et éventuellement, pour chacun de ces terminaux, des paramètres de fonctionnement complémentaires.

Les données de fonctionnement complémentaires 1204 sont par exemple celles illustrées dans le tableau 5 suivant :

**[Tableau 5]**

| **ID** | **PTT** |
|---|---|
| 4 | ○ |
| 5 | ○ |
| 6 | N |

Au cours d'une étape 1104, le système de gestion 224 détecte la réception ou la présence du dispositif de stockage externe 1204 dans le port externe 144.

Les étapes 1106 et 1108 suivantes sont par exemple mises en oeuvre automatiquement en conséquence de la détection de l'étape 1104. Alternativement, en conséquence de la détection de l'étape 1104, le système de gestion 224 requiert une validation d'un utilisateur et les étapes 1106 et 1108 suivantes sont mises en oeuvre en cas de validation de l'utilisateur.

Au cours de l'étape 1106, le système de gestion 224 récupère, depuis le dispositif de stockage externe 1202 reçu dans le port externe 144, les données de fonctionnement complémentaires 1204 et les fournit au dispositif élu S1.

Au cours de l'étape 1108, le système de gestion 224 modifie les données de fonctionnement en cours 226₁ du dispositif S1 à partir des données de fonctionnement complémentaires 1204, en particulier la liste en cours est modifiée à partir de la liste complémentaire. Dans l'exemple décrit, la modification est une fusion des données en cours et complémentaires entraînant en particulier une fusion des listes en cours et complémentaire. Ainsi, les identifiants de la liste complémentaires (qui ne sont pas déjà présents dans la liste en cours) sont ajoutés à la liste en cours, avec le cas échéant leurs paramètres de fonctionnement associés. Ces données de fonctionnement en cours 226₁, après modification, sont ainsi utilisées par les éléments 204, 206, 208, 216 du dispositif élu S1. Les données de fonctionnement en cours 226₁, après modification, de l'exemple décrit sont illustrées dans le tableau 6 suivant :

**[Tableau 6]**

| **ID** | **PTT** | **IP** | **DISPOSITIF** |
|---|---|---|---|
| 1 | ○ | 1.1.1.1 | S1 |
| 2 | ○ | 1.1.1.2 | S1 |
| 3 | ○ | 1.1.1.3 | S3 |
| 4 | ○ | | |
| 5 | ○ | | |
| 6 | N | | |

Les cas de collision (un même identifiant apparait dans les deux listes) sont traités selon des règles prédéterminées. Par exemple, de préférence, les paramètres présents dans les données de fonctionnement en cours pour l'identifiant en collision sont gardés, tandis que les paramètres présents dans les données de fonctionnement complémentaires pour cet identifiant en collision sont rejetés.

La fusion peut être temporaire (il faut garder la trace des liste principale et complémentaire) ou pas (une vrai fusion (« merge » en anglais, dans la base 226₁). Le premier cas veut dire par exemple qu'un retour à l'état initial est possible. Le second cas veut dire par exemple re-initialisation de la liste à un démarrage suivant (par exemple par clé USB insérée obligeant la prise en compte d »une liste en cours totalement neuve).

En outre, la fusion peut être temporaire et donc réversible. Dans ce cas, il est prévu de garder une trace des listes principale et secondaire.

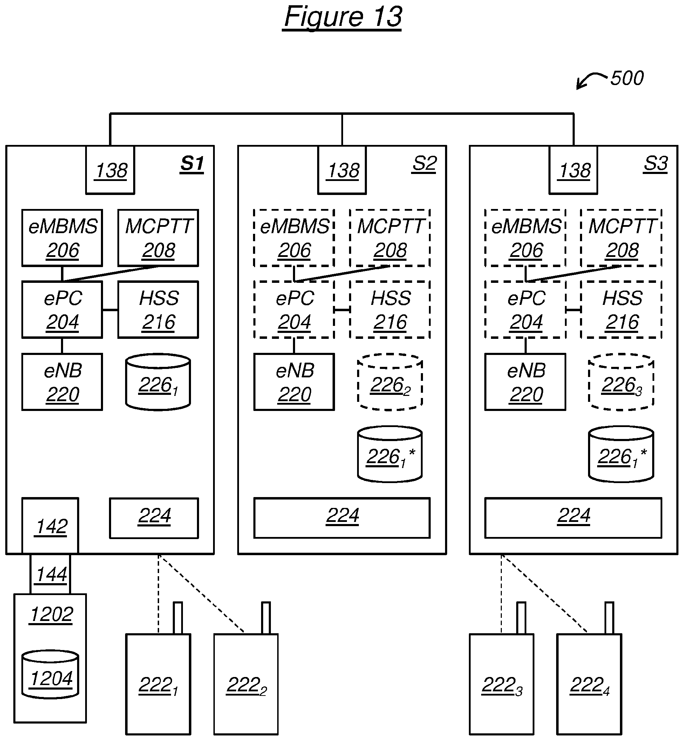

Au cours d'une étape 1110, illustrée sur la figure 13, un téléphone mobile 222₄, ayant l'identifiant 4, se connecte au dispositif S3 et la procédure d'attachement décrite précédemment est mise en oeuvre. Au cours de cette procédure d'attachement, le terminal mobile 222₄ échange des données avec le module de coeur de réseau 204 du dispositif élu S1 afin que ce module de coeur de réseau 204 vérifie, en consultant le serveur d'abonnés 216, que le terminal mobile 222₄ est autorisé à s'attacher à l'infrastructure locale et à utiliser le service PTT. Comme l'identifiant de ce terminal mobile 222₄ apparait dans la liste en cours 226₁ après modification et est associé à une autorisation d'utilisation du service PTT, le terminal mobile 222₄ est autorisé à s'attacher et à utiliser le service PTT.

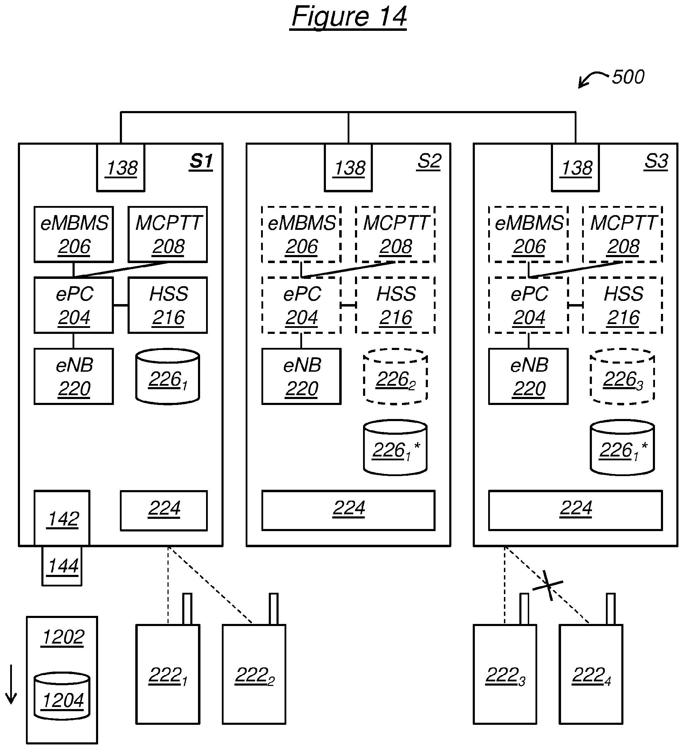

Les étapes suivantes 1112 à 1118 sont illustrées sur la figure 14.

Au cours de l'étape 1112, le dispositif de stockage externe 1202 est rendu inaccessible à l'installation 500. Dans l'exemple décrit, le dispositif de stockage externe 1202 est retiré du port externe 144, par exemple par un utilisateur. Alternativement, le dispositif de stockage externe 1202 est rendu inaccessible en le démontant de manière logicielle (opération de démontage logiciel appelée « unmount » en anglais), sans qu'il ne soit obligatoirement physiquement retiré du port externe 144.

Au cours d'une étape 1114, le système de gestion 224 détecte l'inaccessibilité du dispositif de stockage externe 1202. Par exemple, le système de gestion 224 détecte le retrait ou bien le démontage logiciel du dispositif de stockage externe 1202.

Au cours d'une étape 1116, automatiquement et en conséquence de la détection de l'inaccessibilité du dispositif de stockage externe, le système de gestion 224 purge les données de fonctionnement en cours 1302 en purgeant la liste en cours pour revenir à la liste en cours avant modification et en supprimant les paramètres de fonctionnement associés aux identifiants supprimés.

Dans l'exemple décrit, les données de fonctionnement en cours 226₁ après purge sont illustrées dans le tableau 7 suivant :

**[Tableau 7]**

| **ID** | **PTT** | **IP** | **DISPOSITIF** |
|---|---|---|---|
| 1 | ○ | 1.1.1.1 | S1 |
| 2 | ○ | 1.1.1.2 | S1 |
| 3 | ○ | 1.1.1.3 | S3 |

Au cours d'une étape 1118, comme l'identifiant du terminal 222₄ n'est plus présent dans la liste d'identifiants des données de fonctionnement en cours 226₁, il n'est plus autorisé à utiliser l'infrastructure PMR et est donc détaché à l'initiative de cette dernière.

Il sera apprécié que le procédé 1100 est également applicable à un système comportant un seul dispositif autonome, comme le dispositif 100 ou le dispositif 300.

Alternativement, l'étape 1108 de modification de la liste en cours pourrait comporter le remplacement de la liste en cours par la liste complémentaire.

En outre, un procédé similaire pourrait être mis en oeuvre lorsque les données de fonctionnement complémentaires sont sur un serveur distant connectable par LAN/wifi/4G/ bluetooth/Réseau, voire même sur tout élément de stockage accessible, et qui sert par exemple à initialiser un système informatique (par le boot par exemple), tel qu'un réseau distant, un disque dur (amovible type USB, carte SD, ..., ou non amovible type disque dur HDD/SSD local accessible par un humain), CD, DVD, ...

Les données applicatives (MCPTT ou autre(s)) peuvent utiliser la même notion de reconfiguration de listes.

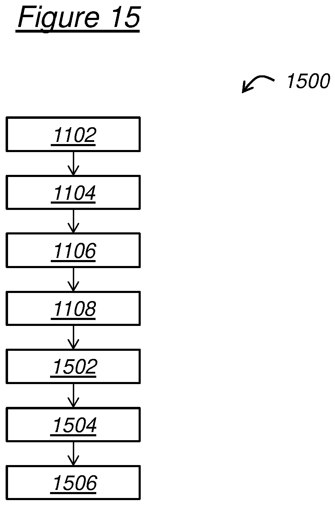

En référence aux figures 15 à 17, un deuxième procédé 1500 de reconfiguration de l'installation 500 va à présent être décrit.

Ce procédé 1500 reprend tout d'abord les étapes 1102, 1104, 1106 et 1108 du procédé 1100.

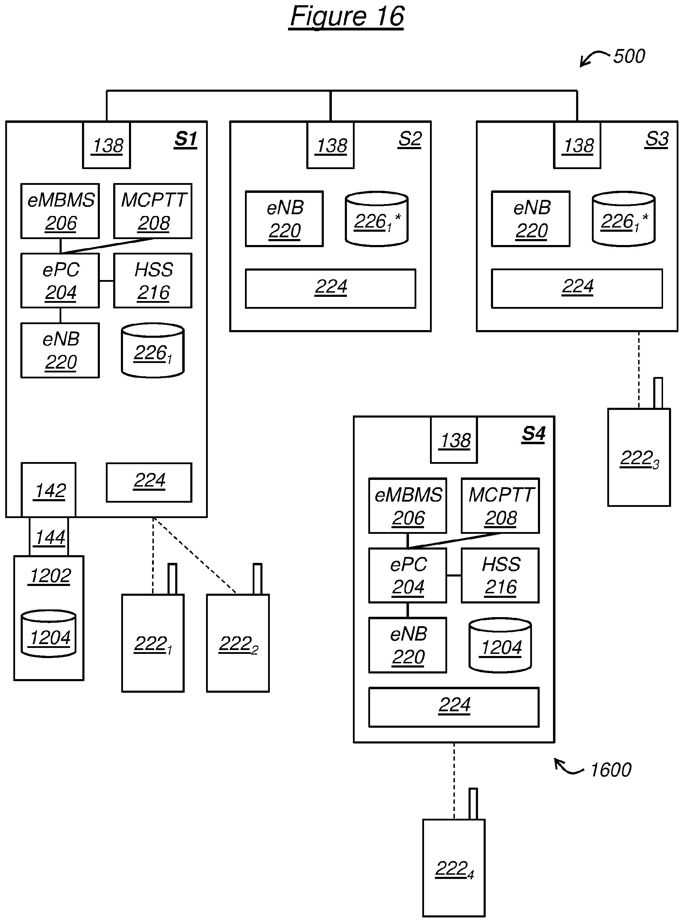

Cependant, comme illustré sur la figure 16, dans le procédé 1500, les données de fonctionnement complémentaires 1204 sont les données de fonctionnement en cours utilisées dans une autre installation PMR 1600 (comportant un seul dispositif S4 dans l'exemple décrit).

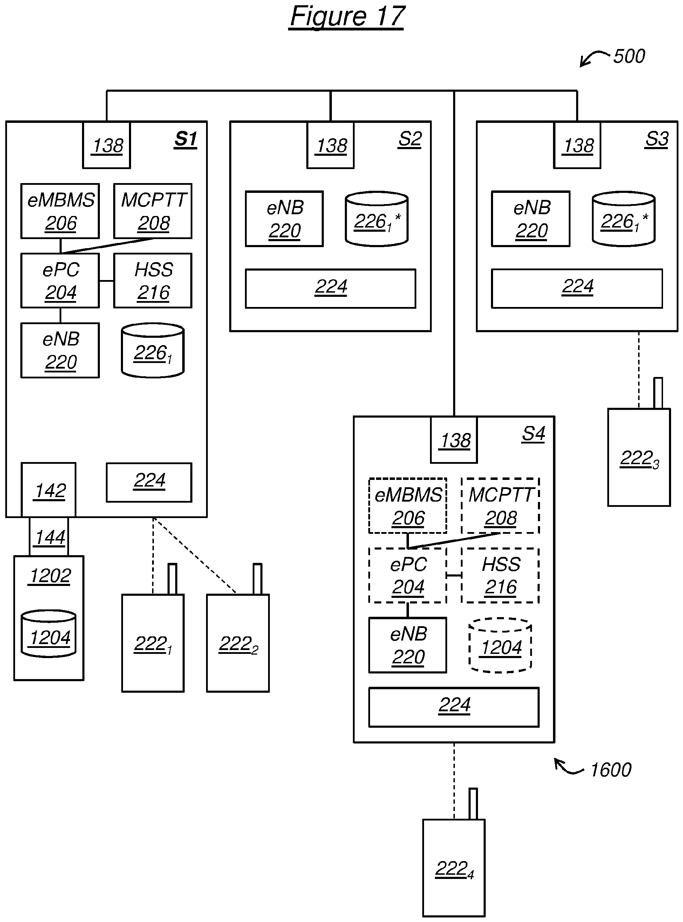

Le procédé 1500 comporte alors les étapes 1502, 1504 et 1506 suivantes, illustrées sur la figure 17.

Au cours d'une étape 1502, l'autre installation 1600 est connectée à l'installation 500. Dans l'exemple décrit, les dispositifs S1 à S4 sont connectés entre eux via leurs interfaces réseau 138 par une connexion réseau.

Au cours d'une étape 1504, le système de gestion 224 (regroupant les modules de gestion 224 des deux installations 500, 1600) désactive le module de coeur de réseau 204, les modules de service 206, 208 et le serveur d'abonnés 216 de chaque dispositif de l'installation 1600 (le dispositif S4 dans l'exemple décrit).

Au cours d'une étape 1506, le système de gestion 224 connecte le module de station de base 220 de chaque dispositif de l'installation 1600 (le dispositif S4 dans l'exemple décrit) au module de coeur de réseau 204 du dispositif élu S1 de l'installation 500 de manière à former une nouvelle infrastructure PMR distribuée, fédérant les deux installations 500, 1600.

Comme les données de fonctionnement en cours 226₁ comportent les données de fonctionnement 1204 de l'installation 1600, les terminaux mobiles attachés à l'installation 1600 peuvent s'attacher à la fédération des installations 500 et 1600.

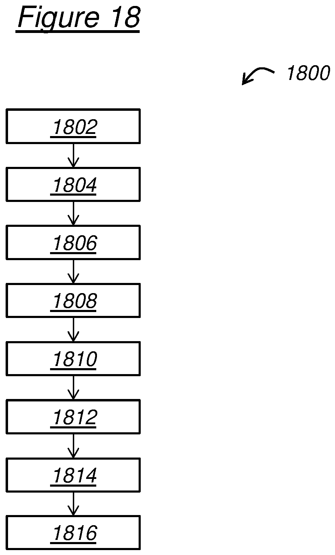

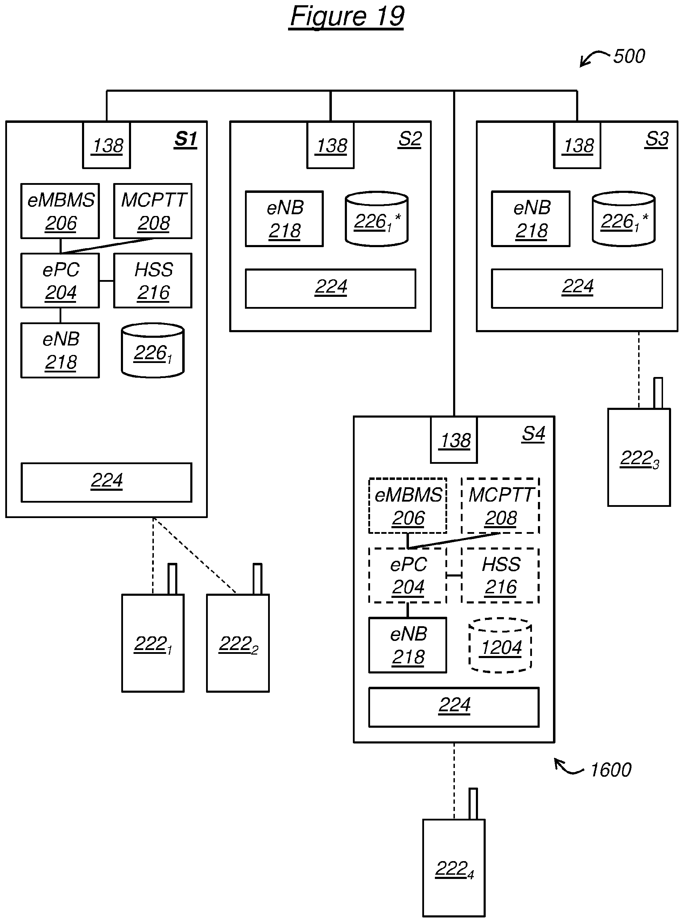

En référence aux figures 18 et 19, un procédé 1800 de fédération de l'installation 500 avec au moins une autre installation (l'installation 1600 décrite précédemment dans l'exemple décrit) va à présent être décrit.

Initialement, l'installation 500 est dans l'état illustré sur la figure 8, c'est-à-dire qu'elle met en oeuvre une infrastructure PMR distribuée, dans laquelle le dispositif S1 est élu. Cette infrastructure PMR distribuée utilise les données de fonctionnement en cours 226₁ qui comportent la liste en cours d'identifiants de terminaux mobiles et, pour chacun d'eux des paramètres de fonctionnement.

Les étapes suivantes sont illustrées sur la figure 19.

Au cours d'une étape 1802, l'installation 1600 est connectée à l'installation 500. Dans l'exemple décrit, les dispositifs S1 à S4 sont connectés entre eux via leurs interfaces réseau 138 par une connexion réseau.

Au cours d'une étape 1804, le système de gestion 224 (regroupant les modules de gestion 224 de l'installation 500) détecte la connexion de l'installation 1600 et requiert une validation d'un utilisateur et les étapes suivantes sont mises en oeuvre en cas de validation de l'utilisateur.

Au cours d'une étape 1806, le système de gestion 224 récupère, depuis l'installation 1600 (et plus précisément, dans l'exemple décrit, depuis le dispositif S4), via la connexion réseau, les données de fonctionnement complémentaires 1204 et les fournit au dispositif élu S1.

Au cours d'une étape 1808, le système de gestion 224 modifie les données de fonctionnement en cours 226₁ du dispositif S1 à partir des données de fonctionnement complémentaires 1204, en particulier la liste en cours est modifiée à partir de la liste complémentaire. Dans l'exemple décrit, la modification est une fusion des données en cours et complémentaires entraînant en particulier une fusion des listes en cours et complémentaire. Ainsi, les identifiants de la liste complémentaires (qui ne sont pas déjà présents dans la liste en cours) sont ajoutés à la liste en cours, avec le cas échéant leurs paramètres de fonctionnement associés. Ces données de fonctionnement en cours 226₁, après modification, sont ainsi utilisées par les éléments 204, 206, 208, 216 du dispositif élu S1. Les données de fonctionnement en cours 226₁, après modification, de l'exemple décrit sont donc les mêmes que celles illustrées dans le tableau 6 précédent.

Les cas de collision (un même identifiant apparait dans les deux listes) sont traités selon des règles prédéterminées, comme expliqué pour le procédé 1100.

Au cours d'une étape 1810, le système de gestion 224 (regroupant les modules de gestion 224 des deux installations 500, 1600) désactive le module de coeur de réseau 204, les modules de service 206, 208 et le serveur d'abonnés 216 de chaque dispositif de l'installation 1600 (le dispositif S4 dans l'exemple décrit).

Au cours d'une étape 1812, le système de gestion 224 connecte le module de station de base 220 de chaque dispositif de l'installation 1600 (le dispositif S4 dans l'exemple décrit) au module de coeur de réseau 204 du dispositif élu S1 de l'installation 500 de manière à former une nouvelle infrastructure PMR distribuée, fédérant les deux installations 500, 1600.

Comme les données de fonctionnement en cours 226₁ comportent les données de fonctionnement 1204 de l'installation 1600, les terminaux mobiles attachés à l'installation 1600 peuvent s'attacher à la fédération des installations 500, 1600.

Au cours d'une étape 1814, l'installation 1600 est déconnectée de l'installation 500.

Au cours d'une étape 1814, le système de gestion 224 (regroupant les modules de gestion 224 de l'installation 500) détecte cette déconnexion.

Au cours d'une étape 1816, automatiquement en conséquence de la détection de la déconnexion, le système de gestion 224 purge les données de fonctionnement en cours 1204 en purgeant la liste en cours pour revenir à la liste en cours avant modification et en supprimant les paramètres de fonctionnement associés aux identifiants supprimés.

Alternativement, l'étape 1816 de purge pourrait aussi être forcée manuellement par un utilisateur de part et d'autre (par exemple, sur l'installation 500 ou bien sur l'installation 1600), ou bien être réaliser lors d'une réinitialisation (« reset » en anglais) ou bien encore au démarrage suivant, selon la configuration.

Il sera apprécié que, dans un mode de réalisation alternatif, l'étape 1808 de modification de la liste en cours pourrait comporter le remplacement de la liste en cours par la liste complémentaire.

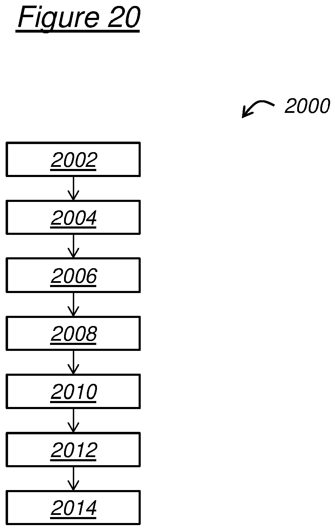

En référence à la figure 20, un procédé 2000 de réduction d'interférence causée par une infrastructure PMR, selon un premier mode de réalisation, va à présent être décrit. L'infrastructure PMR est par exemple mise en oeuvre par un dispositif tel que le dispositif 100 ou bien le dispositif 300, ou bien par une installation telle que l'installation 500 fédérant plusieurs dispositifs. Ainsi, l'infrastructure PMR comporte en particulier un module de coeur de réseau 204 et au moins une station de base 220, à laquelle des terminaux mobiles, comme les terminaux mobiles 222₁ - 222₅, peuvent s'attacher.

Les étapes 2002 à 2012 suivantes sont réalisées pour un ou chacun de plusieurs terminaux mobiles attachés à la station de base 220.

Au cours d'une étape 2002, le terminal mobile considéré reçoit un signal descendant de radiocommunication émis par la station de base 220. Ce signal descendant occupe une bande de fréquences prédéfinie utilisée par la station de base 220 et le terminal mobile pour communiquer entre eux.

Au cours d'une étape 2004, le terminal mobile détermine au moins une caractéristique du signal descendant reçu et transmet cette ou ces caractéristiques à la station de base 220. Par exemple, une ou plusieurs des caractéristiques suivantes sont déterminées et transmises : un rapport de signal sur bruit (de l'anglais « Signal to Noise Ratio » ou SNR), un rapport de signal sur bruit et interférence (de l'anglais « Signal to Interférence and Noise Ratio » ou SINR), une puissance reçue de signal de référence (de l'anglais « Reference Signal Received Power » ou RSRP) et une qualité reçue de signal de référence (de l'anglais « Reference Signal Received Quality » ou RSRQ).

Au cours d'une étape 2006, la station de base 220 reçoit un signal montant de radiocommunication émis par le terminal mobile. Ce signal montant occupe une bande de fréquences prédéfinie utilisée par la station de base 220 et le terminal mobile pour communiquer entre eux.

Les bandes de fréquences des signaux descendant et montant peuvent être identiques par exemple en cas de multiplexage temporel, ou bien différentes par exemple en cas de multiplexage fréquentiel.

Au cours d'une étape 2008, la station de base 220 détermine au moins une caractéristique du signal montant reçu. Par exemple, comme pour le signal descendant, la ou les caractéristiques comportent un ou plusieurs parmi : SNR, SINR, RSRP et RSRQ.

Au cours d'une étape 2010, la station de base détermine 220 une distance la séparant du téléphone mobile. Par exemple, timing calculé lors de séquences protocolaires de type TA (Timing Alignement procédures) dans le 3GPP.

Au cours d'une étape 2012, la station de base 220 recherche une perturbation dans la bande de fréquences du signal descendant et dans la bande de fréquences du signal montant, à partir des caractéristiques des signaux descendant et montant obtenues par la station de base 220.

Par exemple, le SNR du signal descendant est comparé à un seuil, dit seuil descendant, et le SNR du signal montant est comparé à un seuil, dit seuil montant. Si l'un des deux SNR est mauvais, c'est-à-dire inférieur au seuil associé, la présence d'une perturbation affectant le terminal mobile considéré est détectée.

Si plusieurs caractéristiques sont extraites de chaque signal, descendant et montant, ces caractéristiques sont par exemples regroupées en une caractéristique globale qui peut être comparée à un seuil. Alternativement, chaque caractéristique est comparée à un seuil associé et la présence d'une perturbation est détectée lorsque un nombre prédéterminé de caractéristiques, par exemple au moins une ou bien toutes, franchissent leurs seuils. Alternativement encore, des critères de décision plus compliqués, appliqués à la ou aux caractéristiques obtenues par la station de base 220, peuvent être utilisés.

De préférence, la recherche d'une perturbation tient compte de la distance entre la station de base 220 et le terminal mobile. Par exemple, chaque seuil dépend de cette distance. Par exemple, dans le cas du SNR, le seuil diminue avec la distance. En effet, plus le terminal mobile est éloigné de la station de base 220, plus le SNR est mauvais, c'est-à-dire petit. Ainsi, il est normal de trouver un SNR faible pour une distance élevée, sans que cela n'implique la présence d'une perturbation.

Au cours d'une étape 2014, en cas de détection d'une perturbation dans la bande de fréquences du signal montant et/ou du signal descendant pour au moins un terminal mobile attaché à la station de base 220, la station de base 220 diminue sa puissance d'émission au moins dans la bande de fréquences utilisée par la station de base pour émettre des signaux descendants de radiocommunication aux terminaux mobiles attachés.

En effet, la présence d'une perturbation peut indiquer la présence d'un appareil perturbateur émettant dans la même bande de fréquences que l'infrastructure PMR. Or, il arrive fréquemment que plusieurs infrastructures PMR soient utilisées en même temps dans un même périmètre. Ainsi, dans ce cadre, il arrive souvent que l'appareil perturbateur soit une station de base d'une autre infrastructure PMR. Ainsi, le fait que la station de base 220 diminue sa puissance d'émission permet de réduire les interférences causées par cette station de base 220 sur les communications de l'autre infrastructure PMR.

Il est possible de prévoir plusieurs seuils au choix pour l'utilisateur avant de choisir de réduire la puissance, par exemple : - seuil 1, Normal/performances max ; - seuil 1, Interférences - couverture max ; - seuil 3 : interférences -couverture medium (puissance réduite) ; seuil 4 : interférences- débit max - puissance réduite max.

Dans un deuxième mode de réalisation, les étapes 2002 à 2010 sont réalisées pour chacun d'une pluralité de terminaux mobiles attachés à la station de base 220.

Par ailleurs, au cours de l'étape 2012 de recherche d'une perturbation, les SNR des signaux descendant et montant d'un premier terminal mobile sont par exemple respectivement comparés aux SNR des signaux descendant et montant d'un deuxième terminal mobile, plus éloigné de la station de base que le premier terminal mobile (d'après leurs distances à la station de base 220 obtenues par cette dernière). Si au moins un des SNR (de préférence, les deux) du premier terminal mobile est inférieur au SNR correspondant du deuxième terminal mobile, la présence d'une perturbation est détectée. En effet, en l'absence de perturbation, le SNR des terminaux mobiles devraient augmenter en s'approchant de la station de base. Ainsi, lorsque ce n'est pas le cas, c'est qu'une perturbation, pouvant provenir d'une autre infrastructure PMR, vient dégrader le SNR.

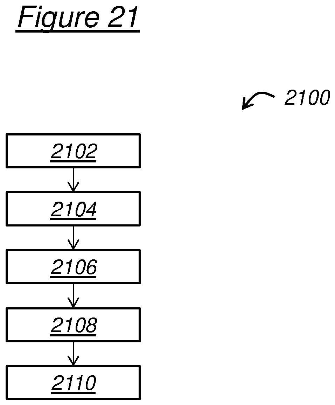

En référence à la figure 21, un procédé 2100 de réduction d'interférence, selon un troisième mode de réalisation, va à présent être décrit.

Au cours d'une étape 2102, la station de base 220 suspend, pendant au moins un intervalle de temps prédéfini, l'émission de signal descendant dans la bande de fréquences dédiée aux signaux descendant.

L'utilisation de plusieurs intervalles permet éviter d'avoir un temps de coupure de transmission trop long qui amène à une perte de connexion des terminaux...

Par exemple, il vaut mieux 20ms de coupure toutes les 500ms pendant 5sec, plutôt que 20*2*5=200ms de coupure d'un coup qui risque de perdre la communication

Au cours d'une étape 2104, la station de base 220 surveille la bande de fréquences pour recevoir un signal ambiant de radiocommunication contenu dans cette bande de fréquences et provenant de l'environnement.

Par exemple, la station de base 220 peut comporter une antenne d'émission dédiée à l'émission des signaux descendant et une antenne de réception dédiée à la réception des signaux montant, ainsi qu'un convertisseur analogique/numérique connecté à ces antennes. Dans ce cas, le convertisseur peut être conçu pour inverser son fonctionnement pour l'antenne d'émission, de manière à acquérir le signal ambiant atteignant l'antenne d'émission. Alternativement, il peut être prévu une carte d'acquisition supplémentaire connectée à l'antenne d'émission pour acquérir le signal ambiant atteignant l'antenne d'émission.

Au cours d'une étape 2106, la station de base 220 détermine au moins une caractéristique du signal ambiant reçu. Par exemple, une puissance du signal ambiant est déterminée.

Au cours d'une étape 2108, la station de base 220 recherche une perturbation dans la bande de fréquences des signaux descendants, à partir de la ou des caractéristiques du signal ambiant obtenues par la station de base 220.

Par exemple, la puissance du signal ambiant est comparée à un seuil. Si cette puissance est supérieure au seuil, la présence d'une perturbation est détectée. En effet, si la puissance est supérieure au seuil, c'est que l'environnement est fortement bruité, ce qui peut provenir d'une autre infrastructure PMR.

Au cours d'une étape 2110, en cas de détection d'une perturbation dans la bande de fréquences des signaux descendants, la station de base 220 diminue sa puissance d'émission au moins dans la bande de fréquences des signaux descendants.

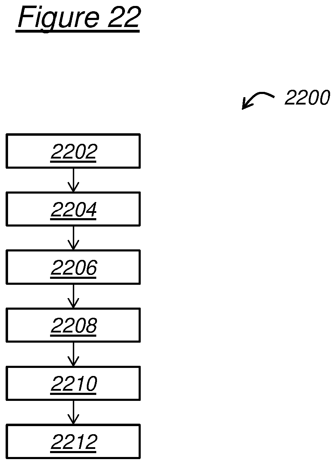

En référence à la figure 22, un procédé 2200 de réduction d'interférence, selon un quatrième mode de réalisation, va à présent être décrit.

Au cours d'une étape 2202, la station de base 220 demande à tous les terminaux mobiles attachés de suspendre, par exemple pendant au moins un intervalle de temps prédéfini, l'émission de signaux montants dans la bande de fréquences dédiée aux signaux montants.

Au cours d'une étape 2204, en réponse à la demande de la station de base 220, les terminaux mobiles attachés suspendent, pendant le ou les intervalles de temps prédéfini, l'émission de signaux montants.

Au cours d'une étape 2206, la station de base 220 surveille la bande de fréquences dédiée aux signaux montants pour recevoir un signal ambiant de radiocommunication contenu dans cette bande de fréquences et provenant de l'environnement.

Par exemple, la station de base 220 peut utiliser l'antenne de réception normalement utilisée pour recevoir les signaux montants.

Au cours d'une étape 2208, la station de base 220 détermine au moins une caractéristique du signal ambiant reçu. Par exemple, une puissance du signal ambiant est déterminée.

Au cours d'une étape 2210, la station de base 220 recherche une perturbation dans la bande de fréquences des signaux montants, à partir de la ou des caractéristiques du signal ambiant obtenues par la station de base 220. Par exemple, la puissance du signal ambiant est comparée à un seuil. Si cette puissance est supérieure au seuil, la présence d'une perturbation est détectée.

Au cours d'une étape 2212, en cas de détection d'une perturbation dans la bande de fréquences des signaux montants, la station de base 220 diminue sa puissance d'émission au moins dans la bande de fréquences des signaux descendants.

Un exemple d'utilisation d'un ou plusieurs des procédés de réduction d'interférence précédents va à présent être décrit.

Initialement, au moins deux infrastructures PMR, chacune mise en oeuvre par exemple par un dispositif transportable comme le dispositif 100 ou le dispositif 300, sont déployées à distance l'une de l'autre.

Un utilisateur détermine l'infrastructure PMR ayant la plus grande puissance d'émission et, en conséquence, active sur cette infrastructure PMR une procédure de réduction d'interférence.

Ainsi, en fonctionnement, l'infrastructure PMR puissante met en oeuvre, à intervalles de temps réguliers ou irréguliers, au moins un des procédés de réduction d'interférence. Par exemple, les intervalles de temps valent entre 1 ms et 200 ms.

Par exemple, au moins un des procédés selon les premier et deuxième modes de réalisation décrits précédemment, est mis en oeuvre, puisqu'ils ne nécessitent pas d'interrompre les communications avec les téléphones mobiles. Lorsqu'une perturbation est détectée, au moins un des procédés selon les troisième et quatrième modes de réalisation, qui eux nécessitent une interruption des communications, peut être mis en oeuvre pour confirmer la présence de la perturbation.

Dans l'exemple décrit, initialement, les deux infrastructures PMR sont déployées à distance, de sorte que la procédure de réduction d'interférence ne détecte pas de perturbation.

Comme les infrastructures PMR sont mobiles, elles peuvent se rapprocher ou s'éloigner l'une de l'autre.

Plusieurs topologies sont possibles sur la base de systèmes d'infrastructures Fixe, mobile et nomadique. Sont possible des perturbations :
- Mobile-mobile
- Mobile - fixe
- Mobile nomadique
- Nomadique - fix
- Nomadique - nomadique

De plus ces systèmes peuvent démarrer/s'arrêter, se rapprocher, s'éloigner.... Tous les cas sont possibles et à prendre en compte in fine si possible.

Le problème est que les stations ne sont pas interconnectées, allumées en permanence et conçues a priori ... et en plus l'infrastructure peut être mobile ET démarrer/s'arrêter selon les missions opérationnelles.

Ainsi, la procédure de réduction d'interférence mise en oeuvre par l'infrastructure PMR puissante détecte une perturbation causée par l'infrastructure PMR moins puissante. Cela signifie que l'infrastructure PMR moins puissante est certainement extrêmement perturbée par l'infrastructure PMR puissante. En conséquence, l'infrastructure PMR puissante diminue sa puissance d'émission, de manière à réduire les perturbations qu'elle cause à l'infrastructure PMR moins puissante.

Un autre intérêt de l'invention est de pouvoir utiliser la même chaine Radio et antennaire que le eNodeb, et si possible le même moyen de computing digital x86 (le ou les microprocesseurs x86) que ceux implémentant le code informatique réalisant la station de base.

Il apparaît clairement qu'un procédé de réduction d'interférence permet de réduire les interférences entre des infrastructures PMR, même lorsque ces dernières sont indépendantes.

On notera par ailleurs que l'invention n'est pas limitée aux modes de réalisation décrits précédemment mais uniquement par les revendications ci-dessous.

Typiquement, elle peut s'appliquer à l'application MCPTT ou tout autre application (professionnelle ou grand public) possibles, nécessitant par exemple une base de données des utilisateurs. Plusieurs applications simultanément supportées sont également possibles. Le MCPTT est pour exemple mais pas forcément PTT ni PMR.

Le principe s'applique aussi à la partie systèmes LTE (HSS et UE), et en option aussi à la partie infrastructure (epc/eNB/PDN/...).

L'invention s'applique aussi à des infrastructures 3G, 4G, 5G, ... et même si nécessaire à une infrastructure de type WIFI ou mixte 4G/WiFi, tant que ça s'applique sur des réseaux base protocole IP pour la partie applicative. En outre, il est également possible de combiner ou fédérer deux architectures différentes, par exemple une en wifi et l'autre en LTE (base applicative à l'identique de ce décrit, base des utilisateurs dans le HSS côté LTE et Base de l'AP (point d'accès, « accès point » en anglais) côté Wifi. Comme on reste sur du protocole IP, le type (Wifi/LTE) et l'adresse IP suffisent au niveau de la fusion des listes pour s'y retrouver. Le cas LTE s'applique au niveau physique OFDM équivalent à du Wimax, du WiFi, de la 4G et même de la 5G.

Le principe des tables et base de données s'applique aussi aux données et identités des clients (localisées sur les terminaux) des applications localement gérées. (pas seulement aux terminaux mobiles et leur identités IMSI).

PMR est une utilisation possible ; en fait possible aussi en Grand Public selon l'application utilisée, car l'invention pourrait également s'appliquer. Typiquement un mode 'MEC' (Mobile Edge Computing) pourrait s'appliquer au système tel qu'il est avec une application spécifique.

Par ailleurs, il peut être décidé aussi de ne pas réduire les interférences à partir d'un certain seuil, afin de garder de la couverture des terminaux mobiles, mais en acceptant de perdre de la capacité. Si on réduit la puissance, un système ou les 2 peuvent perdre de la couverture et donc des UE. L'algorithme peut donc décider qu'à niveau d'interférence 'acceptable', on continue à avoir des interférences `importantes' quitte à perdre beaucoup de débit car la couverture est le premier besoin. Il peut donc y avoir plusieurs seuils selon la configuration couverture vs débit.

Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description; l'invention est uniquement définie par les revendications ci-dessous.

## Revendications

1. Procédé (2000 ; 2100 ; 2200) de réduction d'interférence causée par une infrastructure de réseau mobile privé de radiocommunication mise en oeuvre dans un dispositif transportable (100), comportant :
- pour au moins un terminal mobile attaché à une station de base (220) de l'infrastructure, l'obtention (2004, 2008 ; 2106 ; 2208) par la station de base (220) d'au moins une caractéristique d'au moins un signal de radiocommunication, occupant une bande de fréquences prédéfinie, et utilisé par la station de base (220) et le terminal mobile pour communiquer entre eux et reçu par le terminal mobile ou bien la station de base (220) ;
- la recherche (2012 ; 2108 ; 2210), par la station de base (220), à partir de la ou des caractéristiques, d'une perturbation dans ladite bande de fréquences ; et
- en cas de détection d'une perturbation dans ladite bande de fréquences, la diminution (2014 ; 2110 ; 2212), par la station de base (220), d'une puissance d'émission de la station de base au moins dans ladite bande de fréquences.

2. Procédé (2000) selon la revendication 1, dans lequel le au moins un signal de radiocommunication comporte un signal de radiocommunication descendant, émis par la station de base (220) et reçu par le terminal mobile.

3. Procédé (2000) selon la revendication 1 ou 2, dans lequel le au moins un signal de radiocommunication comporte un signal de radiocommunication montant, émis par le terminal mobile et reçu par la station de base (220).

4. Procédé (2000) selon la revendication 2 ou 3, dans lequel la au moins une caractéristique comporte l'un ou plusieurs parmi : un rapport de signal sur bruit, un rapport signal sur interférence et bruit, une puissance reçue de signal de référence et une qualité reçue de signal de référence.

5. Procédé (2000) selon l'une quelconque des revendications 1 à 4, comportant en outre :
- l'obtention (2010) par la station de base (220) d'une distance séparant le terminal mobile de la station de base (220) ;
et dans lequel la recherche (2012) d'une perturbation tient compte de la distance.

6. Procédé (2100) selon la revendication 1, comportant en outre :
- la suspension (2102) d'émission par la station de base (220) dans la bande de fréquences pendant un intervalle de temps ;
et dans lequel le au moins un signal de radiocommunication comporte un signal de radiocommunication reçu par la station de base (220) pendant l'intervalle de temps.

7. Procédé (2200) selon la revendication 1, comportant en outre :
- une requête (2202) de la station de base (220) causant la suspension (2204) d'émission par le terminal mobile dans la bande de fréquences pendant un intervalle de temps ;
et dans lequel le au moins un signal de radiocommunication comporte un signal de radiocommunication reçu par la station de base pendant l'intervalle de temps.

8. Procédé (2100) selon la revendication 6 ou 7, dans lequel la au moins une caractéristique du signal de radiocommunication reçu par la station de base pendant l'intervalle de temps comporte une puissance de ce signal de radiocommunication.

9. Programme d'ordinateur téléchargeable depuis un réseau de communication et/ou enregistré sur un support lisible par ordinateur et/ou exécutable par un processeur, inclus dans un station de base (220) d'une infrastructure de réseau mobile privé de radiocommunication mise en oeuvre dans un dispositif transportable (100), **caractérisé en ce qu'**il comprend des instructions pour l'exécution des étapes d'un procédé de réduction d'interférence selon l'une quelconque des revendications 1 à 8, lorsque ledit programme est exécuté sur un ordinateur.

10. Dispositif transportable (100) mettant en oeuvre une infrastructure de réseau mobile privé de radiocommunication comportant une station de base (220) comportant des moyens logiciels et/ou matériels configurés pour :
- pour au moins un terminal mobile attaché à la station de base (220), obtenir au moins une caractéristique d'au moins un signal de radiocommunication occupant une bande de fréquences prédéfinie, et utilisé par la station de base (220) et le terminal mobile pour communiquer entre eux et reçu par le terminal mobile ou bien la station de base (220) ;
- rechercher à partir de la ou des caractéristiques une perturbation dans ladite bande de fréquences ; et
- en cas de détection d'une perturbation dans ladite bande de fréquences, diminuer une puissance d'émission au moins dans ladite bande de fréquences.

## Patentansprüche

1. Verfahren (2000; 2100; 2200) zum Reduzieren einer Interferenz, die durch eine in einer transportablen Vorrichtung (100) umgesetzten Infrastruktur eines privaten Mobilfunknetzes verursacht wird, umfassend:
- für mindestens ein mobiles Endgerät, das an eine Basisstation (220) der Infrastruktur angeschlossen ist, Erhalten (2004, 2008; 2106; 2208), durch die Basisstation (220), von mindestens einem Merkmal mindestens eines Funkkommunikationssignals, das ein vordefiniertes Frequenzband belegt und durch die Basisstation (220) und das mobile Endgerät verwendet wird, um miteinander zu kommunizieren, und das entweder durch das mobile Endgerät oder die Basisstation (220) empfangen wird;
- Suchen (2012; 2108; 2210), durch die Basisstation (220) anhand des Merkmals oder der Merkmale, nach einer Störung in dem Frequenzband; und
- bei Erkennung einer Störung in dem Frequenzband, Verringern (2014; 2110; 2212), durch die Basisstation (220), einer Sendeleistung der Basisstation mindestens in dem Frequenzband.

2. Verfahren (2000) nach Anspruch 1, wobei das mindestens eine Funkkommunikationssignal ein Downlink-Funkkommunikationssignal umfasst, das durch die Basisstation (220) gesendet und durch das mobile Endgerät empfangen wird.

3. Verfahren (2000) nach Anspruch 1 oder 2, wobei das mindestens eine Funkkommunikationssignal ein Uplink-Funkkommunikationssignal umfasst, das durch das mobile Endgerät gesendet und durch die Basisstation (220) empfangen wird.

4. Verfahren (2000) nach Anspruch 2 oder 3, wobei das mindestens eine Merkmal eines oder mehrere umfasst von: einem Signal-Rausch-Verhältnis, einem Signal-Interferenz-Rausch-Verhältnis, einer Referenzsignal-Empfangsleistung und einer Referenzsignal-Empfangsqualität.

5. Verfahren (2000) nach einem der Ansprüche 1 bis 4, ferner umfassend:
- Erhalten (2010), durch die Basisstation (220), einer Entfernung, die das mobile Endgerät von der Basisstation (220) trennt;
und in dem das Suchen (2012) nach einer Störung die Entfernung berücksichtigt.

6. Verfahren (2100) nach Anspruch 1, ferner umfassend:
- Aussetzen (2102) des Sendens durch die Basisstation (220) in dem Frequenzband während eines Zeitintervalls;
und wobei das mindestens eine Funkkommunikationssignal ein Funkkommunikationssignal umfasst, das durch die Basisstation (220) während des Zeitintervalls empfangen wird.

7. Verfahren (2200) nach Anspruch 1, ferner umfassend:
- ein Anfordern (2202) der Basisstation (220), das das Aussetzen (2204) des Sendens durch das mobile Endgerät in dem Frequenzband während eines Zeitintervall bewirkt;
und wobei das mindestens eine Funkkommunikationssignal ein Funkkommunikationssignal umfasst, das durch die Basisstation während des Zeitintervalls empfangen wird.

8. Verfahren (2100) nach Anspruch 6 oder 7, wobei das mindestens eine Merkmal des durch die Basisstation während des Zeitintervalls empfangenen Funkkommunikationssignals eine Leistung dieses Funkkommunikationssignals umfasst.

9. Computerprogramm, das von einem Kommunikationsnetz herunterladbar und/oder auf einem computerlesbaren Medium aufgezeichnet und/oder durch einen Prozessor ausführbar ist, das in einer Basisstation (220) einer Infrastruktur des privaten Mobilfunknetzes enthalten ist, die in einer transportablen Vorrichtung (100) umgesetzt ist, **dadurch gekennzeichnet, dass** es Anweisungen zum Ausführen der Schritte eines Verfahrens zum Reduzieren der Interferenz nach einem der Ansprüche 1 bis 8 beinhaltet, wenn das Programm auf einem Computer ausgeführt wird.

10. Transportable Vorrichtung (100), die eine private mobile Funkkommunikationsnetzinfrastruktur umsetzt, die eine Basisstation (220) umfasst, die Software- und/oder Hardwareeinrichtungen umfasst, die konfiguriert sind zum:
- für mindestens ein an die Basisstation (220) angeschlossenes mobiles Endgerät, Erhalten mindestens eines Merkmals mindestens eines Funkkommunikationssignals, das ein vordefiniertes Frequenzband belegt und durch die Basisstation (220) und das mobile Endgerät verwendet wird, um miteinander zu kommunizieren, und das durch das mobile Endgerät oder die Basisstation (220) empfangen wird;
- Suchen, anhand des Merkmals oder der Merkmale, nach einer Störung in diesem Frequenzband; und
- bei Erkennung einer Störung in dem Frequenzband, Verringern einer Sendeleistung mindestens in dem Frequenzband.

## Claims

1. Method (2000; 2100; 2200) for reducing interference caused by a private mobile radio-communication network infrastructure implemented in a transportable device (100), comprising:
- for at least one mobile terminal connected to a base station (220) of the infrastructure, obtaining (2004, 2008; 2106; 2208), by the base station (220), at least one feature of at least one radio-communication signal which occupies a predefined frequency band, and used by the base station (220) and the mobile terminal in order to communicate with each other and received by the mobile terminal or by the base station (220);
- searching (2012; 2108; 2210), by the base station (220), using the feature(s), for a disturbance in said frequency band; and
- if a disturbance is detected in said frequency band, decreasing (2014; 2110; 2212), by the base station (220), a transmission power of the base station at least in said frequency band.

2. Method (2000) according to claim 1, wherein the at least one radio-communication signal comprises a downlink radio-communication signal transmitted by the base station (220) and received by the mobile terminal.

3. Method (2000) according to either claim 1 or claim 2, wherein the at least one radio-communication signal comprises an uplink radio-communication signal transmitted by the mobile terminal and received by the base station (220).

4. Method (2000) according to either claim 2 or claim 3, wherein the at least one feature comprises one or more of: a signal-to-noise ratio, a signal-to-interference-plus-noise ratio, a reference signal received power, and a reference signal received quality.

5. Method (2000) according to any of claims 1 to 4, further comprising:
- obtaining (2010), by the base station (220), a distance which separates the mobile terminal from the base station (220);
and wherein the search (2012) for a disturbance takes into account the distance.

6. Method (2100) according to claim 1, further comprising:
- suspending (2102), by the base station (220), transmission in the frequency band during a time interval;
and wherein the at least one radio-communication signal comprises a radio-communication signal received by the base station (220) during the time interval.

7. Method (2200) according to claim 1, further comprising:
- a request (2202) from the base station (220) causing the transmission to be suspended (2204) by the mobile terminal in the frequency band during a time interval;
and wherein the at least one radio-communication signal comprises a radio-communication signal received by the base station during the time interval.

8. Method (2100) according to either claim 6 or claim 7, wherein the at least one feature of the radio-communication signal received by the base station during the time interval comprises a power of this radio-communication signal.

9. Computer program which can be downloaded from a communication network and/or recorded on a medium which can be read by a computer and/or executed by a processor, and which is included in a base station (220) of a private mobile radio-communication network infrastructure implemented in a transportable device (100), **characterized in that** it comprises instructions for executing the steps of a method for reducing interference according to any of claims 1 to 8 when said program is executed on a computer.

10. Transportable device (100) which implements a private mobile radio-communication network infrastructure comprising a base station (220) comprising software and/or hardware means which are configured to:
- for at least one mobile terminal connected to the base station (220), obtain at least one feature of at least one radio-communication signal which occupies a predefined frequency band, and used by the base station (220) and the mobile terminal in order to communicate with each other and received by the mobile terminal or the base station (220);
- search, using the feature(s), for a disturbance in said frequency band; and
- in the event of a disturbance being detected in said frequency band, decrease a transmission power at least in said frequency band.
